# EUROPEAN PATENT SPECIFICATION

(11) **EP 1 029 085 B1**
(45) Date of publication and mention of the grant of the patent: **29.06.2005**
(21) Application number: 98945664.5
(22) Date of filing: 19.08.1998
(51) Int. Cl.: C21B 7/24, F27B 1/28, G01N 27/04

(54) **PROBE SCANNING SYSTEM FOR CHECKING THE DISTRIBUTION OF BURDEN MATERIALS IN METALLURGICAL UNITS**
SONDENABTASTSYSTEM ZUM KONTROLLIEREN DER VERTEILUNG VON EINSATZGUT IN EINEM METALLURGISCHEN OFEN
SYSTEME D'ANALYSE PAR BALAYAGE POUR LE CONTROLE DE LA DISTRIBUTION DE LA CHARGE D'UN FOUR

(30) Priority: 20.08.1997 RU 97114197; 26.03.1998 RU 98105694
(43) Date of publication of application: 23.08.2000
(60) Divisional application: 04024511.0
(73) Proprietor: MOSKOVSKY INSTITUT STALI I SPLAVOV, Moscow, 117936 (SU)
(72) Inventor: KURUNOV, Ivan Filippovich, Moscow, 119620 (RU); DOBROSKOK, Vladislav Andreevich, Moscow, 117463 (RU); KARABASOV, Jury Sergeevich, Moscow, 117936 (RU); LIPUKHIN, Jury Viktorovich, Cherepovets, 162606 (RU); LOGIVOV, Valery Nikolaevich, Cherepovets, 162614 (RU); VASILIEV, Anatoly Pavlovich, Cherpovets, 162612 (RU)
(74) Representative: Zellentin, Rüdiger, Dr.
(86) International application number: PCT/RU1998/000271
(87) International publication number: WO 1999/009219

(56) References cited:
- DE-A- 1 533 829
- FR-A1- 2 428 671
- GB-A- 1 385 307
- RU-C1- 2 002 809
- SU-A- 1 039 965
- US-A- 4 914 948
- BUCHWALDER J ET AL: "ERFAHRUNGEN MIT DEM EINSATZ EINES SONDENSYSTEMS ZUR MESSUNG DER MOELLERVERTEILUNG IM HOCHOFEN APPLICATION OF THE AUTOMATIC SCANNING SYSTEM FOR DETECTION OF THE REAL BURDEN DISTRIBUTION AT THE BLAST FURNACE" STAHL UND EISEN, VERLAG STAHLEISEN GMBH. DUSSELDORF, DE, vol. 120, no. 12, December 2000 (2000-12), pages 93-97, XP009009320 ISSN: 0340-4803
- PATENT ABSTRACTS OF JAPAN vol. 0070, no. 11 (C-145), 18 January 1983 (1983-01-18) -& JP 57 169005 A (SHIN NIPPON SEITETSU KK), 18 October 1982 (1982-10-18)

## Description

### FIELD OF ENGINEERING

This invention relates to the metallurgical industry, specifically to control devices for charge material distribution in metallurgical units, for example in blast furnaces.

### KNOWN LEVEL OF TECHNOLOGY

Known to public is a device for measuring the parameters of the charge and top gas which is fixed permanently in a blast furnace working chamber and has thermocouples and fixtures for taking samples of top gas (SU 618178 A1, V.P.Tarasov et al., 23.08.90, C21 B 7/24).
But this device has the following disadvantages :
- it does not help to control the structure of the stock column in the furnace, which therefore can be judged only indirectly using the controlled composition and temperature of the top gas;
- it affects the distribution of burden materials when they are charged into the furnace;
- short service life.

The most similar to the claimed invention in technical essence and results achieved is a probe scanning system for checking the distribution of burden materials in metallurgical units which contains a horizontal probe, probe-positioning mechanism with a drive, burden material defining sensor, probe displacement transducer and limit switches, computing device, a unit of analog-to-digital converters whose information inputs are connected to the sensor, transducer and limit switches, and information output to the computing device inputs ( RU 2002809 C1, V.A.Dobroskok et al., 15.11.93, C21 B 7/24). This probe scanning system is free from the drawbacks of the previous device, but does not allow to measure the structure of the burden material column in an automatic mode and requires an operator's participation in the measurements. In addition to this, for more accurate measuring of the burden material column structure in metallurgical units with the help of the probe scanning system it is necessary to measure the speed of the charge descent over the entire scanning radius and that is not provided for in this system.

### DISCLOSURE OF INVENTION

The goal of the invention is to extend the functional capabilities of the probe scanning system, to ensure its operation in the automatic mode and to improve the accuracy of measurements.

The specified goal is achieved as follows: a probe scanning system for checking the distribution of burden materials in metallurgical units which contains a horizontal probe, probe-positioning mechanism with a drive, burden material defining sensor, probe displacement transducer and limit switches, computing device, a unit of analog-to-digital converters whose information inputs are connected to the sensor, transducer and limit switches, and information output to the computing device inputs, is additionally equipped with a probe drive control unit and a stockline monitoring device with its operation control unit, where inputs of the control units are connected to the outputs of the computing device and the information output of the stockline monitoring device is connected to the input of the unit of analog-to-digital converters.

The probe scanning system can be additionally equipped with a charge descent speed control device and/or a stockline contour checking device with control units, where information outputs of the charge descent speed control device and stockline contour checking device are connected to the inputs of the unit of analog-to-digital converters, and the inputs of those devices' control units are connected to the outputs of the computing device.

The probe scanning system is equipped with a burden material defining sensor. This sensor consists of a conducting body, insulating gaskets and conducting contact elements connected together with the body to different terminals of the electric current source and is additionally equipped with a conducting rod located along the sensor body longitudinal axis and a longitudinal insulating liner between the sensor body and the conducting rod, where the latter has a transverse insulating gasket and a fairing, which is a contact element, fixed on its one end, and on the other end there are a transverse insulating compensate gasket and clamping elements to secure the conducting rod and insulating gaskets in the sensor body.

Burden material defining sensor can be additionally equipped with a conducting tube, located between the conducting rod and sensor body and connected to the contact element, and with a longitudinal insulating lining fitted between the conducting tube and the sensor body.

Equipping the probe scanning system with the probe drive control unit allows to realize the automatic mode of its operation under the preassigned programme, i.e. to fulfil automatic measuring of the structure of the stock column in a metallurgical unit in preassigned steps and section height. In this case availability in the probe scanning system of the stockline monitoring device with its drive and the drive control unit allows to determine the speed of the burden descent in the metallurgical unit at points of measuring of the stockline.

The operation of the above mentioned stockline monitoring device can be mechanical, laser, etc. Providing the stockline monitoring device with a control unit permits to make measurements of the stockline at preassigned instants of timefor accurate determination of the burden descent speed.

Making the probe scanning system equipped with the burden descent speed control device and/or a stockline contour checking device provides for further increase in accuracy of measurements of the stock column structure in a metallurgical unit. In this case it is possible to ensure the measurement of the burden descent speed over the entire scanning radius, or the calculation of this speed, if the speed control device is not available and the probe scanning system has only the stockline contour checking device. Based on the measurements made with the latter it is possible to calculate the burden descent speed over the entire radius of scanning.

The availability of the stockline contour checking device in the probe scanning system provides an additional possibility to control the process of deformation of layers of various burden materials and their mixing while descending in the metallurgical unit.

Fitting the burden material sensor with a conducting rod ensures its reliability and durability due to the fact that this high-strength, for example steel, rod serve as an electric current conductor. The sensor body serve as the second conductor. The necessary electrical insulation between them is provided by longitudinal and transverse insulation liners. In addition to this, the compensate gasket makes up for possible change in thickness of the insulating gasket between the sensor body and the fairing due to the exposure to high temperatures and corrosive medium in the working chamber of a metallurgical unit. Clamping elements for the conducting rod and insulation gaskets in the sensor body ensure the stiffness of the sensor and electrical insulation of the sensor body and rod when moving in the working chamber of the metallurgical unit.

Supplying the sensor with a conducting tube allows to improve the accuracy of measurement of the stock column structure in a horizontal direction. The sensor fitted with the conducting tube registers the closing of the circuit by pieces of electrically conductive burden materials (coke) whose size exceeds the thickness of the insulation gasket between the fairing and contact element of the sensor connected to the conducting tube. Thus, the sensor allows to determine the position of each piece of such material along the axis of scanning. This makes possible to identify layers of mixtures of conducting and nonconducting materials which extends the functional capabilities of the claimed probe scanning system for control of the burden material distribution and the burden material defining sensor integrated in this system.

### BRIEF DESCRIPTION OF DRAWINGS

Fig. 1 shows the block diagram of the probe scanning system. Fig. 2 and Fig. 3 show longitudinal section of the burden material defining sensor in two variants.
Fig. 4 and Fig. 5 show the results of probing of two blast furnaces of different volumes.

### BEST VARIANTS OF REALIZATION OF INVENTION

The probe scanning system contains a horizontal probe 1, probe-positioning mechanism with a drive 2, burden material defining sensor 3, probe displacement transducer 4, limit switches 5, computing device 6, a unit of analog-to-digital converters 7, probe drive control unit 8, stockline monitoring device 9, operation control unit of the stockline monitoring device 10. The horizontal probe can serve not only as a load-carrying structure housing the burden material defining sensor and constituent components of other units, for example, a thermocouple, a device for taking samples of gas and/or materials from the furnace, etc., but also as the body of the burden material defining sensor. At cross-section the probe body can be round as well as of any other shape, for example oval, rectangular, square, etc.

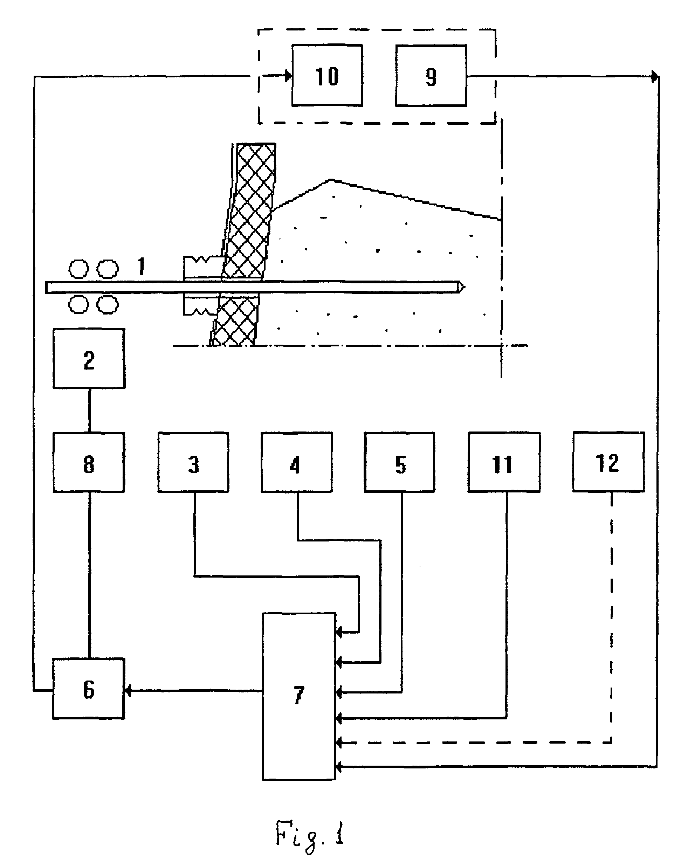

In addition, the probe scanning system may also contain the burden descent speed control device 11 and/or a stockline contour checking device 12 with control units (Fig.1).

The information inputs of the unit of analog-to-digital converters 7 are connected to the burden material defining sensor 3, probe displacement transducer 4, limit switches 5, stockline monitoring device 9, burden descent speed control device 11 and the stockline contour checking device 12. The outputs of the unit of analog-to-digital converters 7 are connected to the input of the computing device 6, and the computing device outputs are connected to the probe drive control unit 8 and the control unit of the stockline monitoring device .

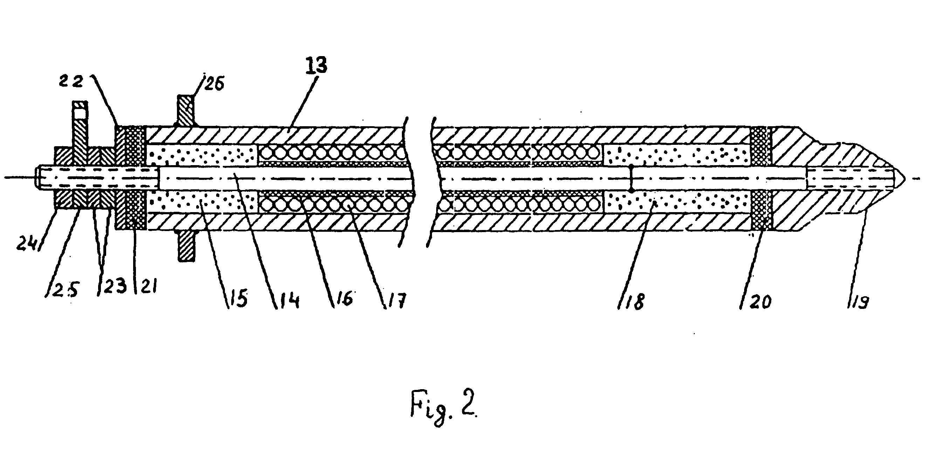

The design of the burden material defining sensor is as follows. The conducting metal body 13 of the sensor is made, for example, in the form of a tube inside which there is a conducting rod 14 (Fig. 2). Between the body 13 and the conducting rod 14 there is a longitudinal insulation liner made composite and containing, for example, components made of concrete 15, asbestos cloth 16, asbestos cord 17 and heat-resistant concrete 18. At its forward end the sensor has the fairing 19 in the form of a conical clamping nut screwed onto the conducting rod. The fairing form and method of its fastening on the conducting rod may differ from those shown in Fig. 2. Between the fairing 19 and body 13 there is an insulation gasket 20. The conducting rod 14 is secured in the sensor body 13 with the help of clamping nuts 23 after fitting the insulation compensate gasket 21 and washer 22. At the rear end of the conducting rod a contact element 25 is secured with clamping nut 24. Through this contact element the sensor is connected to the measuring circuit and to one of the connectors of an electric current source. The other connector of the electric current source is connected to the sensor body.The sensor body has 26 a stop welded on its rear part. The shape of the body and other parts of the burden material defining sensor, shown in Fig.2, as well as the type of their joining relate solely to this particular realization of this sensor.

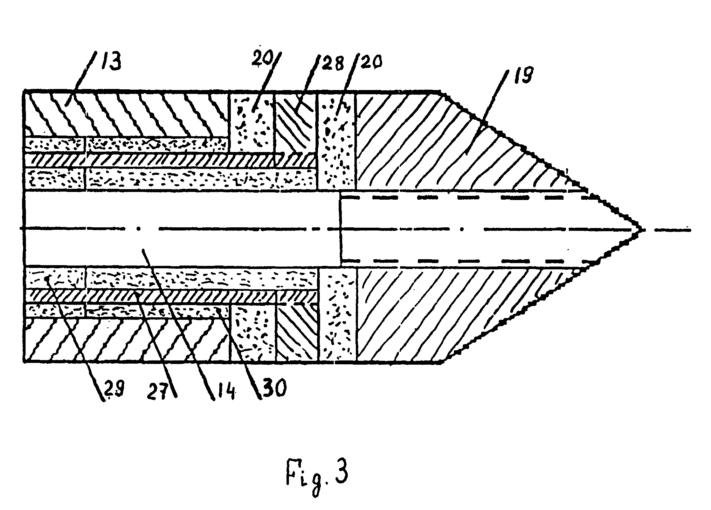

Fig.3 shows a design variant of the sensor where it is additionally fitted with the conducting tube 27 located between the sensor body 13 and the conducting rod 14 and isolated from those with the help of insulation liners 20, 29 and 30, of which the latter two are longitudinal. The conducting tube 27 is connected to the contact element 28. The measuring circuit and the electric current source terminals are connected to the conducting tube 27 and the central rod 14 through the contact elements in the rear part of the sensor.

The probe scanning system operates as follows. The command to bring the probe scanning system into operation is given from the control board of the computing device which generates a control signal and applies it to the control unit of the probe positioning mechanism drive. The horizontal probe, which can serve as the burden material defining sensor as well as the load-carrying structure housing this sensor, is inserted with its forward part into the working chamber of the metallurgical unit through the lock and gland devices in the metallurgical unit jacket with the help of the probe positioning mechanism and its drive and executes translational motion in the direction of the metallurgical unit centre. The electric measuring circuit determines the signal quantity in the ectric circuit of which the fairing and the sensor body are elements. The quantity of this signal depends on the electric conductivity of the burden materials where the forward part of the sensor is located at the moment of signal reading. The above mentioned circuit closes when the sensor fairing passes through the layer of conductive materials (coke, for example) and it opens when the sensor fairing passes through the layer of nonconductive, (for 15example, iron-ore) materials.

In the design variant of the sensor with inner conducting tube an electric circuit between the contact element 28 and the fairing 19 is used to measure the quantity of the signal. This design allows to determine the bounderies of small accumulations of burden materials of various conductivity, for example, coke and iron-ore materials, with greater accuracy. Thus, when the probe moves from the periphery to the centre of the metallurgical unit, the measuring circuit of the sensor generates an electric signal of a discrete type and the level of which depends on the type of material in which the sensor fairing is located at this moment of time. Then the signal comes through the unit of analog-to- digital converters into the computing device. Simultaneously the probe displacement transducer generates a signal about the position of the burden material defining sensor in the metallurgical unit at the level of probing which also comes to the computing device. When the sensor fairing reaches the assigned point, for example the centre of the metallurgical unit, a limit switch generates a control signal to stop the probe movement towards the centre of the metallurgical unit and start moving in the return direction. When the probe reaches the initial position, the limit switch generates a control signal to stop movement. After the assigned idle time, one minute for example, the computing device again issues an instruction to the probe drive control unit to introduce the probe into the metallurgical unit. The number of the probe travels (scanning cycle) is set from the computing device control board. After the probe scanning system is switched on the signals from the stockline monitoring device are fed through the unit of analog-to-digital converters onto the computing device which calculates theburden descent speed. If the probe scanning system is provided with the burden descent speed control device and/or a stockline contour checking device, the information signals from them also come to the computing device through the unit of analog-to-digital converters. The computing device converts the information coming from the sensor and transducer according to preset program into a two-dimensional image (along the vertical cross-section of the metallurgical unit) of layers of the burden materials with different conductivity, for example coke and iron-ore materials, and calculates their proportion along the probing axis as well as other parameters characterizing the structure of the stock column. Graphic and digital information from the computing device arrives at the video terminal or the printer and is memorized.

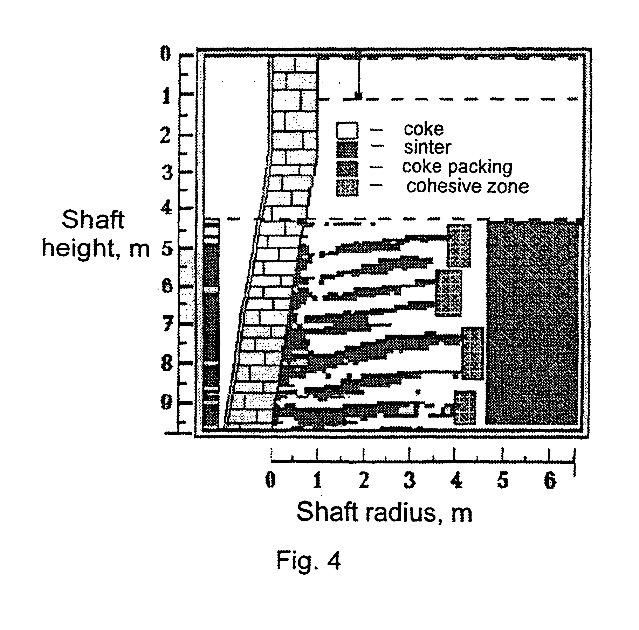

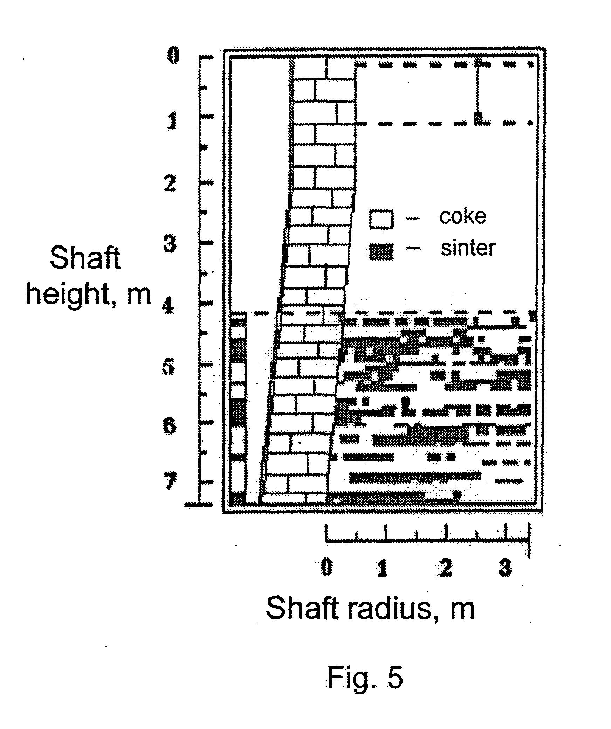

The results of probing of two blast furnaces equipped with different charging devices are shown in Fig.4 and 5.

Fig. 4 shows the image of the stock column structure in a vertical section of the shaft of a 5580-m3 blast furnace equipped with the Paul Wurt charging device. Characteristic of this furnace is the availability of a strong central gas flow and extension of the melting zone in the centre of the furnace to the level 3-4 meters below the stockline. As a result, in the central zone of the furnace at the probing level there is only the coke packing, down which the liquid products of melting flow.

Fig.5 shows the image of the stock column structure in a vertical section of the shaft of a 1000-m3 blast furnace equipped with the bell charging device.

Characteristic of this furnace is a less pronounced layered structure which is due to the charging procedure and the charging device used.

Quantitative analysis of the radial distribution of various burden materials, for example coke and iron-ore materials, the shape and thickness of their layers and layers of their mix allows to timely adjust the burden distribution in the metallurgical unit for the purpose of optimization of its performance. The use of the probe scanning system in the blast furnace allows to control the radial distribution of ore, optimize it and achieve by this the minimum fuel rate or the maximum productivity of the furnace.

### INDUSTRIAL USEFULNESS

The presented probe scanning system for control of the burden material distribution in a metallurgical unit allows to reliably measure the thickness and shape of the burden material layers inside a metallurgical unit which is necessary for optimization of their distribution across the horizontal section for the purpose of improving the technical and economic indicators of the blast furnace process. It can also be used for adaptation of mathematical model of the material distribution over the cross-section during their charging into the metallurgical unit.

The claimed probe scanning system allows timely, as the need arise, to get information about the structure of the stock column inside a metallurgical unit, for example in the blast furnace below the probing level to the preassigned depth, and which depends on the probing cycle and the idle time between two reciprocating passes of the probe.

## Claims

1. The probe scanning system for checking the distribution of burden materials in metallurgical units which contains a horizontal probe, probe-positioning mechanism with a drive, burden material defining sensor, probe displacement transducer, limit switches, computing device, a unit of analog-to-digital converters whose information inputs are connected to the sensor, transducer and limit switches, and information outputs - to the computing device inputs, **characterised in that** the system features a probe drive control unit and a stockline monitoring device with its drive and the drive control unit, where the inputs of the control units are connected to the outputs of the computing device, and the information output of the stockline monitoring device is connected to the input of the unit of analog-to-digital converters.

2. The probe scanning system according to claim 1, wherein it is equipped with a burden descent speed control device and/or a stockline contour checking device with control units, where information outputs of the descent speed control device and stockline contour checking device are connected to the inputs of the unit of analog-to-digital converters, and the inputs of those devices' control units are connected to the outputs of the computing device.

## Patentansprüche

1. Sonden-Abtastsystem zum Überprüfen der Verteilung von Möllermaterialien in Verhüttungseinheiten, das eine horizontale Sonde, einen Sonden-Positioniermechanismus mit einem Antrieb, einen Sensor zum Bestimmen des Möllermaterials, einen Sonden-Weggeber, Begrenzungsschalter, eine Rechenvorrichtung, eine Einheit aus Analog/Digital-Wandlern, deren Dateneingänge mit dem Sensor, dem Geber und den Begrenzungsschaltern, und deren Datenausgänge mit den Eingängen der Recheneinheit verbunden sind, **dadurch gekennzeichnet, dass** das System eine Steuereinheit für den Sondenantrieb und eine Füllstandslinien-Überwachungseinheit mit deren Antrieb und der Antriebs-Steuereinheit bereitstellt, wobei die Eingänge der Steuereinheiten mit den Ausgängen der Recheneinrichtung verbunden sind und der Datenausgang der Füllstandslinien-Überwachungseinheit mit dem Eingang der Einheit aus Analog/Digital-Wandlern verbunden ist.

2. Sonden-Abtastsystem nach Anspruch 1, **dadurch gekennzeichnet, dass** es mit einer Steuereinrichtung für die Möller-Absinkgeschwindigkeit und/oder einer Einrichtung zum Überprüfen der Füllstandslinien-Kontur mit Steuereinheiten ausgestattet ist, wobei die Datenausgänge der Steuereinrichtung für die Absinkgeschwindigkeit und die Einrichtung zum Überprüfen der Füllstandslinien-Kontur mit den Eingängen der Einheit aus Analog/Digital-Wandlern verbunden sind, und die Eingänge der Steuereinheiten dieser Einrichtungen mit den Ausgängen der Recheneinrichtung verbunden sind.

## Revendications

1. Système de balayage à sonde pour contrôler la distribution de matériaux de charge dans des unités métallurgiques, contenant une sonde horizontale, un mécanisme de positionnement de la sonde avec un dispositif d'entraînement, un capteur définissant le matériau de charge, un transducteur de déplacement de la sonde, des interrupteurs de fin de course, un dispositif de calcul, une unité de convertisseurs analogiques-numériques dont les entrées d'information sont connectées au capteur, au transducteur et aux interrupteurs de fin de course, les sorties d'information étant connectées aux entrées du dispositif de calcul, **caractérisé en ce que** le système comporte une unité de commande de l'entraînement de la sonde et un dispositif de surveillance du niveau de remplissage avec un dispositif d'entraînement et une unité de commande de l'entraînement, les entrées des unités de commande étant connectées aux sorties du dispositif de calcul et la sortie d'information du dispositif de surveillance du niveau de remplissage étant connectée à l'entrée de l'unité des convertisseurs analogiques-numériques.

2. Système de balayage à sonde selon la revendication 1, comportant un dispositif de commande de la vitesse de descente de la charge et/ou un dispositif de contrôle du contour du niveau de remplissage avec des unités de commande, les sorties d'information du dispositif de commande de la vitesse de descente et du dispositif de contrôle du contour du niveau de remplissage étant connectées aux entrées de l'unité des convertisseurs analogiques-numériques, les entrées des unités de commande de ces dispositifs étant connectées aux sorties du dispositif de calcul.
